# EUROPÄISCHE PATENTSCHRIFT

(11) **EP 1 731 923 B1**
(45) Veröffentlichungstag und Bekanntmachung des Hinweises auf die Patenterteilung: **18.04.2012**
(21) Anmeldenummer: 06003552.4
(22) Anmeldetag: 22.02.2006
(51) Int. Cl.: G01S 17/42, G01S 17/87, G01C 15/00

(54) **Verfahren zur Entfernungsbestimmung und Anzeige, sowie Entfernungsmesssystem, insbesondere zur Unterstützung für das Verlegen einer Brücke**
Distance determining method and display and distance measuring system, in particular as assistance means for bridge laying
Procédé destiné à la détermination de l'éloignement et affichage, ainsi que système de mesure d'éloignement destiné en particulier à l'assistance en vue de l'installation d'un pont

(30) Priorität: 31.05.2005 DE 102005024735
(43) Veröffentlichungstag der Anmeldung: 13.12.2006
(73) Patentinhaber: Rheinmetall Landsysteme GmbH, 24107 Kiel (DE)
(72) Erfinder: Bruhn, Ralf, 24259 Westensee (DE); Krützfeldt, Manfred, 24229 Schwedeneck (DE); Wende, Wolfram, 24536 Neumünster (DE)
(74) Vertreter: Dietrich, Barbara

(56) Entgegenhaltungen:
- WO-A-00/25089
- WO-A-90/12330
- DE-A1- 10 033 873
- US-A- 5 988 862

## Beschreibung

Bekannt sind Entfarnungsmesssysteme aus dem zivilen als auch militärischen Bereichen, wie beispielsweise Tachymeter für topographische Messungen, kombinierte Systeme, wie auf der Webseite http://www.fischinger-messen.de/kep12.pdf beschrieben, Laserentfernungsmesser, beispielsweise der Fa. Zeiss, die es auch mit Kamerasicht, Nachtsicht und IR-Sicht gibt.

Militärische Entfernungsmesssysteme basieren in der Regel auf einem nicht detektierbaren Laserstrahl, oftmals in Kombination mit direkten optischen Sichtmitteln bzw. Kamerasystemen, die den anvisierten Zleipunkt anzeigen können. Ein mittels Hand gehaltenes Detektiersystem mit Entfernungsmesser ist bereits auf dem 1. Europäischen Symposium nichtletaler Waffen vorgestellt worden, welches am 25. - 26.09.2001 in Ettlingen stattgefunden hat, und durch das Fraunhofer Institut Chemische Technologie in der Broschüre "1st European Symposium on Non-Lethal Weapons" auf den Seiten 6-2 bis 6-12 veröffentlicht ist. Obwohl diesen Systemen eine gute Genauigkeit zugrunde liegt, kann damit Insbesondere keine Geländekontur bestimmt und danach angezeigt werden.

Aus der DE 100 33 873 A1 ist ein Verfahren zur automatischen Vermessung und Kartierung von Gelände- und Raumprofilen mittels optischem winkelgasteuertem Rotations-Entfernungsmesser und rechnergesteuerter Messdstanverarbeätung bekannt. Dabei ist ein optischer Entfernungsmesser in horizontaler und optional in vertikaler Richtung drehbar angeordnet. Der Entfernungsmesser kann über eine Schrittmotorsteuerung oder einen Winkeldecoder winkelgenau positioniert und die Messdaten ermittelt werden. Dadurch können zwei- oder dreidimensionale Geometrien der Messobjekte berechnet und angezeigt und / oder abgespeichert werden. Es werden fortlaufende Messungen während der Drehbewegung an verschiedenen Messpositionen durchgeführt. Die Messpositionen selbst werden als ergänzende Informationen zu den jeweiligen Messdaten eines Raumes abgespeichert. Danach wird unter Verwindung der entsprechenden Messwerte und Standort-Parameter die Gesamtzeichnung erstellt.

Mit der WO 90/12330 A wird ein handgehaltener Laser-Entfernungsmesser publiziert. Die Vorrichtung umfasst einen Nelgungsmesser zur Messung der Neigung des Gerätes auf die Horizontale. Die Vorrichtung wird zur Vermessung einer Felswand verwendet. Die Felswand wird durch Messung der Distanz und den entsprechenden Nelgungswinkeln für eine Reihe von Punkten entlang einer Vertikalen und dieser Prozess für eine Reihe von Positionen entlang der Länge wiederholt. Die Position der Profile ergibt sich aus den beabsichtigten oder tatsächlichen Borlochpositionen. Diese Daten werden in einem Speicher gespeichert. Mit Hilfe einer Software wird ein dreidimensionales Modell der Felswand erzeugt, aus denen sich Isometrische Ansichten aus jeder Perspektive erzeugen langen, sowie vertikale und horizontale Querschnitte, zusammen mit den zugehörigen numerischen Daten.

Die WO 00/25089 A betrifft eine Vorrichtung und ein Verfahren zur Erzeugung eines 3D-Bildes für den Einsatz in der Vermessung. Die Vorrichtung umfasst ein bildgebendes Gerät, einen Entfernungemesser sowie eine Verarbeitungseinheit, wobei das Gerät in der Regel ein Anzeigegerät enthält. Das Gerät kann über eine Pan- und Tilteinheit geschwenkt und geneigt werden. Die Vorrichtung beinhaltet des Weiteren Sensoren, wie Kompass, und Neigungssensor, zum Messen des Lage- und Neigungswinkels zum Ziel. Ober X- und Y-Koordinaten und dem digitalisierten Bild werden dann dreidimensionale Koordinaten geschaffen, so dass ein dreidimensionales Zielbild erzeugt werden kann. Mit verschiedenen Aufnahmen in unterschiedilchen Winkeln sind auch 380° Darstellungen mit der Software realisierbar.

Hier greift die Erfindung die Aufgabe auf, ein Verfahren und ein Messsystem aufzuzeigen, welche mit einfachen Mitteln ein Abtasten sowie ein Sichtbarmachen als Geländekontur auf einem Bildschirm ermöglichen. In Weiterführung der Aufgabe dienen diese Informationen dann insbesondere der Unterstützung für das Verlegen einer Brücke durch Pioniereinheiten.

Gelöst wird die Aufgabe durch im Anspruch 1 sowie 7 enthaltenen Merkmale.

Vorteilhafte Ausführungen sind in den Unteransprüchen aufgezählt.

Der Erfindung liegt die prinzipiell die Idee zugrunde, basierend auf wenigstens einem kommerziellen Entfernungsmesser, ein vor einem Messsystem befindliches Gelände, wie beispielsweise ein gegenüberliegendes Ufer, eine Uferböschung, ein Wassergraben, etc., abzutastenund diese Abtastung als Geländeschnitt bzw. im Seitenschnitt dann auf einem Monitor visualisiert darzustellen. Um in der Darstellung einen Höhenversatz zwischen dem Messort bzw. Messsystem und dem gescannten Gelände berücksichtigen zu können, wird zudem ein Winkel zwischen dem Messort und der Geländekontur ermittelt. Die auf dem Monitor dargestellte Geländekontur kann dann, vorzugsweise automatisch, mit Entfernungsmessmarken versehen werden. Die Messsysteme dienen zur Visualisierung von Geländekonturen und zur Ermittlung geeigneter Übersetzstellen für das militärische Brückenverlegen insbesondere unter Panzerschutz.

Als bevorzugter Entfernungsmesser hat sich ein Laser- Entfernungsmesser gezeigt. Das rotierende Spiegel ―Laser-System tastet das Gelände vertikal ab. Die Reflexion wird dann in einem skalierbaren Geländeschnitt dargestellt.

In einem weiteren Messschritt können auch die Querneigung und / oder die Längsneigung des Messsystems zum gescannten Gelände oder umgekehrt ermittelt und angezeigt, zumindest aber berücksichtigt werden. In einer einfachsten Ausführung kann die Querneigung mittels Horizontkreuz in einem Winkelspiegel abgeglichen werden. Alternativ kann in einer weiteren Ausbaustufe mit in einem definierten Abstand montierten (weiteren) Laserabtaster die Querneigung des abzutastenden Geländes ermittelt und am Monitor angezeigt werden.

Für die Berücksichtigung einer möglichen Längsneigung des Messsystems kann ein optischer Sensor bzw. ein weiterer Winkelgeber genutzt werden.

Insbesondere bei einem Brückenlegepanzer hat es sich gezeigt, dass es zweckmäßig ist, die Brückenablegstelle vorab zu vermessen und einen Höhenversatz zwischen dem Fahrzeug bzw. dem darauf befindlichen Messsystem und dem Gelände sowie die Quer- und / oder Längsneigung des Fahrzeuges als auch eine Verwindung des Geländes zum Fahrzeug für das Verlegen zu berücksichtigen. Diese Messdaten werden in Anwendung des beschriebenen Verfahrens als Seitenschnitt bzw. als Geländeschnitt auf dem Kommandanten- und / oder Fahrermonitor sichtbar gemacht, so dass auf Basis der Messdaten bzw. der Monitoranzeige dann entschieden werden kann, ob und / oder wie der Brückenverlegvorgang durchzuführen ist.

Dazu wird nach dem Heranfahren an einen Brückenübersetzpunkt der Messvorgang eingeleitet. Die vertikale Messung bzw. Abtastung des Geländes (Ufer, Böschungen, Hügel, Wälle etc.) wird erfasst, berechnet und angezeigt. Die Geländekontur wird vorzugsweise mit einer horizontalen Linie sowie mit der Linie der Fahrzeugebene dargestellt. Des Weiteren werden senkrecht die Entfernungslinien angezeigt. In Verbindung mit Längs- / Querneigungsgebern im / am Fahrzeug kann die eigene Fahrzeugneigung im Verhältnis zum möglichen Brückenverlegvorgang auch visuell dargestellt werden.

Es hat sich als vorteilhaft bzw. ausreichend gezeigt, bei Nutzung von zwei Scannern, die beiden scannenden Sensoren am Fahrzeug im Abstand von ca. 3 m voneinander anzubringen. Dies kann bevorzug im Bereich der Bugspitze des Fahrzeuges erfolgen.

Die so mit einfachen Mitteln aufgezeigte Lösung hat den Vorteil, dass mit einem oder mehreren vorzugsweise kommerziellen Lasermesssystemen schnell und definiert Entfernung und Kontur eines gegenüberliegenden Ufers bzw. Geländes ermittelt werden kann. Es kann verzichtet werden, mit einem Periskop oder einem Kamerasystem die Entfernungspunkte anzufahren und mit dem Laser zu messen. Diese Möglichkeit steht aber alternativ zur Verfügung. Zudem ist das Messsystem unter ballistischem Schutz einsetzbar.

Anhand von Ausführungsbeispielen mit Zeichnung soll die Erfindung näher erläutert werden.
Es zeigt:
- Fig. 1: eine Entfernungsmessung mit Hilfe eines ersten Messsystems zur graphischen Darstellung,
- Fig. 2.1: das erste Messsystem zur Bestimmung eines Uferabstandes und eines Höhenversatzes des Ufers zur Messplattform,
- Fig. 2.2: eine mögliche Darstellung der Entfernungsmessung auf dem Monitor,
- Fig. 2.3: das Messsystem aus Fig. 1 zur Bestimmung der Querneigung des gegenüberliegenden Ufers bzw. der relativen Verschränkung zwischen Messplattform und gegenüberliegenden Ufer,
- Fig. 3: ein weiteres Messsystem und Anzeigesystem zur Bestimmung des Uferabstandes und zulässiger Neigung.

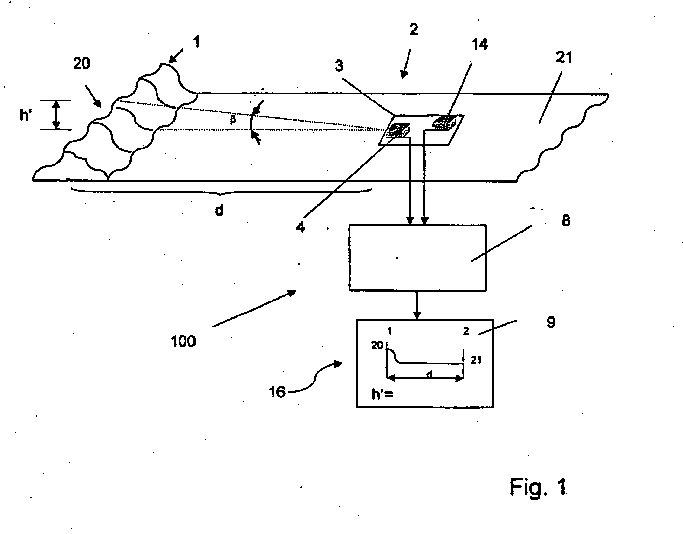

In Fig. 1 ist ein erstes Messsystem 100 dargestellt, welches auf einer erhöhten Messplattform 3 installiert die Entfernung d von der Messplattform 3 zu einem Höhenverlauf 20 ermittelt. Dieses Messsystem 100 weist einen, den Höhenverlauf 20 scannenden Sensor 4 auf, welcher beim Scannen Daten an eine Datenverarbeitungseinheit 8 gibt. Als beispielsweise bekannte Größe liegt in dieser Datenverarbeitungs- und -auswerteeinheit 8 die Höhe des Sensors 4 bezogen zum Boden 21. Aus den ermittelten Daten kann die Datenverarbeitungseinheit 8 einen Geländeschnitt 16 zwischen Höhenverlauf 20 und Scanner 4 kreieren, der auf dem Monitor 9 darstellbar ist. Dabei kann neben der Entfernung d auch der Höhenversatz h' des Höhenverlaufs 20 bezogen auf den Boden 21 und / oder den Scanner 4 messdatentechnisch angezeigt werden.

Aufbauend auf diesem Messsystem 100 und das Messprinzip ausnutzend, werden weitere Messsysteme 101 und 102 insbesondere zum Verlegen einer nicht näher dargestellten Brücke verwendet. Diese Messung und Visualisierung unterstützt die Überprüfung der Längs-und Querneigung des Fahrzeugs, d.h., der Querneigung einzelner Widerlager (Auflagepunkte der Brücke) sowie der Längsneigung und der Abstand der Widerlager der Brücke zueinander. Die Neigungen und Abstände können gleichfalls angezeigt werden.

Mit Hilfe dieser Entfernungsmesssysteme 101 oder 102 wird vor dem Verlegen das Gelände abgetastet, bzw. wie in diesem Fall, eine Uferkontur 20.1 ermittelt und visualisiert als horizontaler Geländeschnitt 16.1 auf einem Monitor 9 dargestellt.

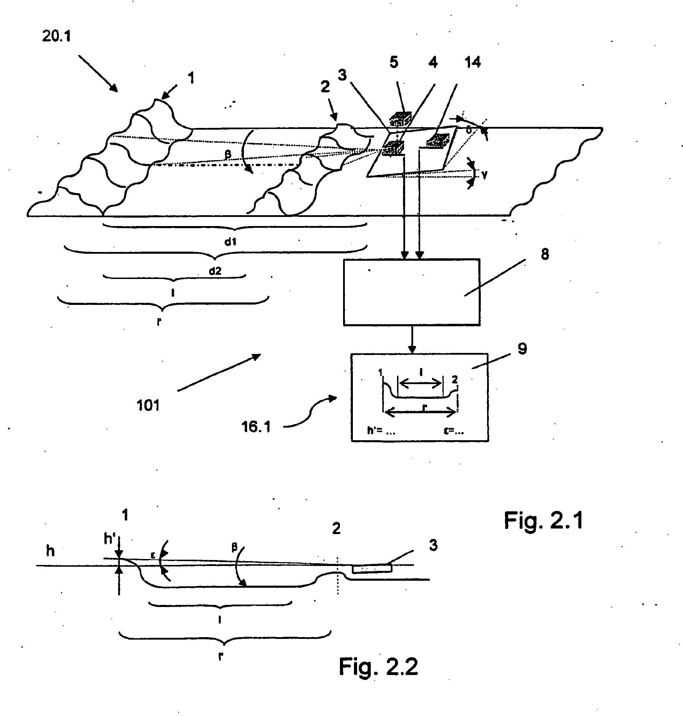

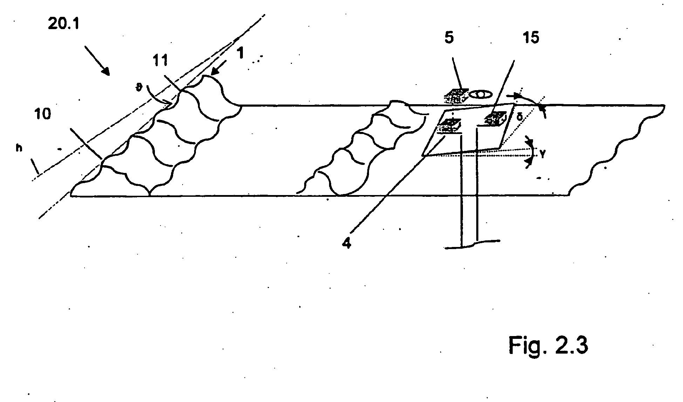

In der Fig. 2.1 in Kombination mit Fig. 2.3 ist das Entfernungsmesssystem 101 auf Basis des scannenden Sensors 4 des Messsystems 100 dargestellt, der als ein Laser-Entfernungsmesser das Gelände, bzw. die Gewässerkontur 20.1 bestimmend, ein gegenüberliegendes Ufer 1 abscannt. Dabei liefert der Sensor 4 in diesem Ausführungsbeispiel Informationen über den Uferabstand **I** bzw. **I'** sowie über die Höhendifferenz **h'** zwischen den Ufern 1, 2 bzw. dem gegenüberliegenden Ufer 1 und dem Fahrzeug 3. Mit Hilfe eines weiteren Sensors 14 wird ein messtechnischer Bezug zur Horizontalen h hergestellt. Der als Winkelgeber ausgeführte Sensor 14 liefert dabei ebenfalls Daten zur horizontalen Darstellung des Geländeschnittes 16.1, d.h., der seitlichen Schnittdarstellung des gescannten Geländes, die über die Datenverarbeitungseinheit 8 auf dem Bildschirm 9 anzeigbar sind und dient der Bestimmung und Berücksichtigung / Kompensation der Längsneigung γ des Fahrzeugs 3.
Der Winkelgeber 14 wird vorzugsweise als kombinierter Quer- / Längsneigungsgeber ausgeführt. Dieser dient bevorzugt zur Überwachung der zulässigen Neigung des Fahrzeugs 3. Diese Informationen können auf dem Monitor 9 dargestellt werden.

In Weiterbildung des Messsystems 101 ist zur Bestimmung der Querneigung (ϑ und δ) zwischen einem gegenüberliegenden Ufer 1 (Gelände 1) und der Messplattform / Fahrzeug 3, ein optisches Messsystem 5 (Fig. 2.2) eingebunden (wird noch ausgeführt).

Der vertikal abtastende Laserscanner 4 sowie die optische Messeinrichtung 5 und der Quer-/ Längsneigungsgeber 14 sind bevorzugt auf dem bzw. am Fahrzeug 3 montiert.

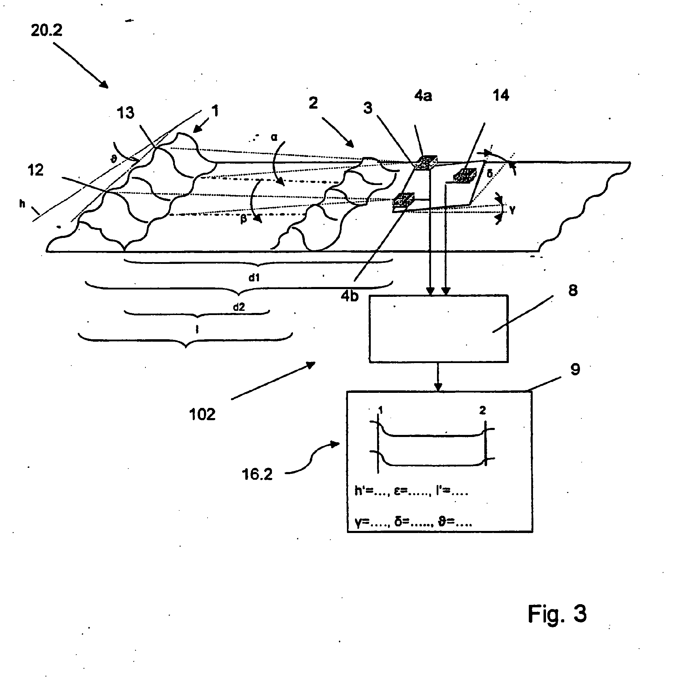

Nach Fig. 3 werden ein weiteres Messverfahren sowie ein weiteres Messsystem 102 aufgezeigt. Das Messsystem 102 besteht aus wenigstens zwei, voneinander in einem definierten Abstand am Fahrzeug 3 angebrachte, vertikal abtastende Laserscanner 4a, 4b. Der elektronische Quer- / Längsneigungsgeber 14 dient der Kompensation bzw. Berücksichtigung der Fahrzeugneigung und wird auch hier zur horizontalen Darstellung des / der Geländeabschnitte 16.2 benötigt. (Es werden dabei entsprechend der Anzahl der Sensoren mehrere Geländeschnitte 16.2 erstellt.) Des Weiteren liefert der Winkelgeber 14 Signale für die Auswerteeinheit 8, damit diese die Lage des Fahrzeugs 3 elektronisch berücksichtigen bzw. verarbeiten kann.

### Wirkungsweise des Messsysteme 101, 102:

Eine Aufgabe der Messsysteme 101, 102 ist, wie bereits erwähnt, die Bestimmung des Abstandes zwischen den beiden Gewässerböschungen (Ufer 1, 2), um über das Gewässer die Brücke verlegen zu können. Eine weitere Aufgabe ist die Ermittlung des Höhenversatzes h' bzw. die Bestimmung eines Winkels ε zwischen der Fahrzeug-Aufstandsfläche und dem gegenüberliegenden Ufer 1. Weiterhin soll der Verdrehwinkel ϑ zwischen dem Fahrzeug 3 und dem gegenüberliegenden Ufer 1 (entsprechend der Verbindungslinie 10-11 bzw. 12-13) bestimmt werden.

Zur Ermittlung des Uferabstandes **I** bzw. **I'** und des Höhenversatzes **h'** wird im Messverfahren nach Fig. 2.1 mit Hilfe des Scanners 4 der Geländeschnitt 16.1 erstellt. Das Messsignal für den Winkelwert β und für den Entfernungswert d wird an eine Auswerteeinheit 8 übertragen. In dieser werden die Messwerte mit der Längsneigung γ des Fahrzeugs 3 korrigiert (verrechnet) und danach die Daten für den Beginn und das Ende der Uferkanten 1, 2 bzw. der Uferabstand **I** bzw. **I'** berechnet (die Auflagepunkte der Brücke). Diese Daten werden auf dem Sichtgerät bzw. Bildschirm 9 dargestellt. Weiterhin werden in der Auswerteeinheit der Höhenversatz bzw. die Höhendifferenz **h'** und der Steigungswinkel ε berechnet und ebenfalls auf dem Bildschirm 9 dargestellt (Fig. 2.2).

Zur Ermittlung der Querneigung des Fahrzeugs 3 nach Fig. 2.3 dient das optische System 5, welches bevorzugt über in die Optik eingespiegelte Sichtmarken (nicht näher dargestellt) verfügt, die die Lage des Fahrzeugs 3 sowie den maximal zulässigen Kantwinkel der gegenüberliegenden Uferkante (Linie 10-11) darstellen. Die Querneigung setzt sich bezogen auf die Horizontale **h** aus den Winkeln ϑ und δ zusammen. Eine Überschreitung der maximal zulässigen Querneigung bzw. Verdrehung der zu verlegenden Brücke wird hier vorzugsweise rein optisch ermittelt. In Auswertung, die visuell als auch akustisch eingespielt werden kann, wird bei einer Überschreitung eines zulässigen Winkelbereichs der Verlegvorgang nicht durchgeführt.

Im Messverfahren nach Fig. 3 wird der Uferabstand **I, I'** (bzw. **d1, d2**) durch wenigstens zwei scannende Sensoren 4a, 4b bestimmt. Die Querneigung (ϑ + δ) sowie der Steigungswinkel ε bzw. der Höhenversatz **h'** werden durch Verknüpfung der Messwerte der beiden Sensoren 4a, 4b berechnet. Der Neigungsgeber 14 stellt den Bezug zur Horizontalen h her. Zur Ermittlung des Uferabstandes und des Höhenversatzes werden mit Hilfe der Scanner 4a, 4b Geländeschnitte erstellt. Die Messsignale, Winkelwert α**,** Winkelwert β und die Entfernungswerte **d1, d2** werden an die Auswerteeinheit 8 übertragen. In dieser werden die Messwerte mit der Längsneigung γ des Fahrzeugs 3 korrigiert (verrechnet) und danach die Daten für den Beginn und das Ende der Uferkanten 1, 2 bzw. der Uferabstand **I** bzw. **I'** berechnet. Diese Daten werden auf dem Sichtgerät 9 dargestellt. Weiterhin werden in der Auswerteeinheit der Höhenversatz bzw. die Höhendifferenz **h'** und der Steigungswinkel ε berechnet und ebenfalls im Geländeschnitt 16.2 auf dem Bildschirm 9 dargestellt.

Zur Ermittlung der Querneigung werden die Messwerte α (13) sowie β (12) der Sensoren 4a, 4b an die Auswerteeinheit 8 übertragen. Mit Hilfe dieser wird die Querneigung ϑ (Verbindungslinie 12 - 13) des gegenüberliegenden Ufers 1 bezogen auf die Plattform 3 unter Berücksichtigung der Querneigung δ bestimmt.
Eine Überschreitung der maximal zulässigen Querneigung bzw. Verdrehung der zu verlegenden Brücke wird in diesem Fall dann bevorzugt elektronisch in der Auswerteeinheit 8 berechnet. Winkelwert und vorzugsweise eine Warninformation (visuell, akustisch etc.) werden u. a. auf dem Bildschirm 9 angezeigt.

Es versteht sich, dass Kombinationen der Baugruppen beider Messsysteme 101, 102 möglich sind.

## Patentansprüche

1. Verfahren zur Verlegung einer Brücke unter zur Hilfenahme eines Messsystems (100, 101, 102) auf einem Fahrzeug (3) mit folgenden Schritten:
- Bestimmung der Entfernung (d1, d2) des gegenüberliegenden Geländes (1) zu wenigstens zwei voneinander in einem definierten Abstand am Fahrzeug angebrachten vertikal abtastenden Laserscannern (4a, 4b),
- Bestimmung wenigstens zweier Winkel (α, β) zwischen der Geländekontur (1) und einem Boden (21), zu dem das Messsystem (101, 102) beabstandet ist,
- Verarbeitung dieser Daten in einer Datenverarbeitungs- und -auswerteeinheit (8) zur
- Ermittlung eines Höhenversatzes (h') und / oder eines Steigungswinkels (ε) zwischen dem Fahrzeug (3) und dem gegenüberliegenden Gelände (1),
- Bestimmung einer Querneigung bezogen auf die Horizontale (h) aus einem Verdrehwinkel (ϑ) zwischen dem Fahrzeug (3) und dem gegenüberliegenden Gelände (1) sowie einem Neigungswinkel (δ) des Fahrzeugs (3) zum Boden (21),
wobei der Bezug zur Horizontalen (h) durch einen Neigungsgeber (14) hergestellt wird,
- horizontales Darstellen des Geländes (1) als Geländeschnitt (16.1, 16.2) auf dem Monitor (9).

2. Verfahren nach Anspruch 1, **gekennzeichnet durch**
- die Bestimmung einer Längsneigung (γ) das Fahrzeugs (3) zum Boden (21).

3. Verfahren nach Ansprüche 1 oder 2, **dadurch gekennzeichnet, dass** der Höhenabstand zwischen dem Messsystem (100, 101, 102) und dem Boden (21) als bekannte Größe in der Datenverarbeitungs- und -auswerteeinheit (8) vorliegt.

4. Verfahren nach einem der Ansprüche 1 bis 3, **dadurch gekennzeichnet, dass** die auf dem Monitor (9) dargestellte Geländekontur (1, 20, 20.1) mit Entfemungsmessmarken versehen ist.

5. Verfahren nach einem der Ansprüche 1 bis 4, **dadurch gekennzeichnet, dass** auf Basis der Messdaten bzw. der Monitoranzeige entschieden wird, ob ein Brückenlegevorgang durchzuführen ist.

6. Verfahren nach Anspruch 5, **dadurch gekennzeichnet, dass** bei einer Überschreitung eines zulässigen Winkelbereiches der Verlegevorgang nicht durchgeführt wird.

7. Messsystem (100) zur Durchführung des Verfahrens nach einem der Ansprüche 1 bis 6, aufweisend zumindest zwei Laserscanner (4, 4a, 4b), eine Datenverarbeitungs- und -auswerteeinheit (8) sowie zumindest einen Monitor (9).

8. Messsystem nach Anspruch 7, **gekennzeichnet durch** einen Sensor (14) als kombinierten Winkelgeber und / oder ein optisches Messsystem (5).

9. Messsystem nach Anspruch 7 oder 8, **dadurch gekennzeichnet, dass** der die Laserscanner (4, 4a, 4b) Lasermesser mit einem rotierenden Spiegel-Laser-System sind.

10. Messsystem nach einem der Ansprüche 7 bis 9, **dadurch gekennzeichnet, dass** der Monitor (9) ein Sichtgerät ist.

11. Messsystem nach einem der Ansprüche 7 bis 10, **dadurch gekennzeichnet, dass** das Fahrzeug ein Brückenlegepanzer ist.

12. Messsystem nach einem der Ansprüche 7 bis 11, **dadurch gekennzeichnet, dass** bei Nutzung von zwei Scannern (4, 4a, 4b) diese am Fahrzeug im Abstand von ca. 3m voneinander angebracht sind.

13. Messsystem nach einem der Ansprüche 7 bis 12, **dadurch gekennzeichnet, dass** das Messsystem (100) im Bereich der Bugspitze des Fahrzeugs angeordnet ist.

## Claims

1. Method for deploying a bridge using a measuring system (100, 101, 102) on a vehicle (3) having the following steps:
- determining the distance (d1, d2) of the opposite terrain (1) from at least two vertically scanning laser scanners (4a, 4b) which are mounted on the vehicle at a defined distance apart,
- determining at least two angles (α,β) between the relief (1) and a piece of ground (21) which is at a distance from the measuring system (101, 102),
- processing of these data items in a data processing and evaluation unit (8) in order
- to determine a vertical offset (h') and/or an angle of inclination (ε) between the vehicle (3) and the opposite terrain (1),
- determining a lateral inclination with respect to the horizontal (h) from
a rotational angle (ϑ), between the vehicle (3) and the opposite terrain (1) as well as an angle of inclination (δ) of the vehicle (3) with respect to the ground (21), wherein the reference to horizontal (h) is produced by means of an inclination sensor (14),
- horizontal representation of the terrain (1) as a section of terrain (16.1, 16.2) on the monitor (9).

2. Method according to Claim 1, **characterized by**
- the determination of a longitudinal inclination (γ) of the vehicle (3) with respect to the ground (21).

3. Method according to Claim 1 or 2, **characterized in that** the vertical distance between the measuring system (100, 101, 102) and the ground (21) is present as a known variable in the data processing and evaluation unit (8).

4. Method according to one of Claims 1 to 3, **characterized in that** the terrain contour (1, 20, 20.1) which is represented on the monitor (9) is provided with distance measuring marks.

5. Method according to one Claims 1 to 4, **characterized in that** on the basis of the measurement data or the monitor display it is decided whether a bridge deployment process is to be carried out.

6. Method according to Claim 5, **characterized in that** upon exceeding a permissible angular range the deployment process is not carried out.

7. Measuring system (100) for carrying out the method according to one of Claims 1 to 6, having at least two laser scanners (4, 4a, 4b), one data processing and evaluation unit (8) and at least one monitor (9).

8. Measuring system according to Claim 7, **characterized by** a sensor (14) as a combined angle transducer and/or an optical measuring system (5).

9. Measuring system according to Claim 7 or 8, **characterized in that** the laser scanners (4, 4a, 4b) are laser measuring devices with a rotating mirror laser system.

10. Measuring system according to one of Claims 7 to 9, **characterized in that** the monitor (9) is an imaging device.

11. Measuring system according to one of Claims 7 to 10, **characterized in that** the vehicle is an armoured bridge deploying vehicle.

12. Measuring system according to one of Claims 7 to 11, **characterized in that** when two scanners (4, 4a, 4b) are used, they are mounted on the vehicle with a distance of 3 m between them.

13. Measuring system according to one of Claims 7 to 12, **characterized in that** the measuring system (100) is arranged in the region of the front of the vehicle.

## Revendications

1. Procédé pour poser un pont à l'aide d'un système de mesure (100, 101, 102) sur un véhicule (3), comprenant les étapes suivantes :
- détermination de la distance (d1, d2) du terrain opposé (1) par rapport à au moins deux dispositifs de balayage à laser (4a, 4b) montés sur le véhicule avec un écart donné et balayant verticalement,
- détermination d'au moins deux angles (α, β) entre le profil du terrain (1) et un sol (21) duquel le système de mesure (101, 102) est éloigné,
- traitement de ces données dans une unité de traitement et d'interprétation des données (8) en vue de la
- détermination d'un décalage en hauteur (h') et/ou d'un angle de pente (ε) entre le véhicule (3) et le terrain opposé (1),
- Détermination d'une inclinaison transversale par rapport à l'horizontale (h) à partir d'un angle de torsion (ϑ) entre le véhicule (3) et le terrain opposé (1) ainsi que d'un angle d'inclinaison (δ) du véhicule (3) par rapport au sol (21),
la référence à l'horizontale (h) étant produite par un inclinomètre (14),
- représentation horizontale du terrain (1) sous la forme d'une coupe de terrain (16.1, 16.2) sur le moniteur (9).

2. Procédé selon la revendication 1, **caractérisé par** la détermination d'une inclinaison longitudinale (y) du véhicule (3) par rapport au sol (21).

3. Procédé selon la revendication 1 ou 2, **caractérisé en ce que** l'espacement en hauteur entre le système de mesure (100, 101, 102) et le sol (21) est présent sous la forme d'une grandeur connue dans l'unité de traitement et d'interprétation des données (8).

4. Procédé selon l'une des revendications 1 à 3, **caractérisé en ce que** le profil du terrain (1, 20, 20.1) représenté sur le moniteur (9) est doté de repères d'éloignement.

5. Procédé selon l'une des revendications 1 à 4, **caractérisé en ce que** la décision d'exécuter l'opération de pose du pont est prise en se basant sur les données de mesure ou sur l'indication du moniteur.

6. Procédé selon la revendication 5, **caractérisé en ce que** l'opération de pose n'est pas exécutée en cas de dépassement d'une plage angulaire admissible.

7. Système de mesure (100) pour mettre en oeuvre le procédé selon l'une des revendications 1 à 6, présentant au moins deux dispositifs de balayage à laser (4, 4a, 4b), une unité de traitement et d'interprétation des données (8) et au moins un moniteur (9).

8. Système de mesure selon la revendication 7, **caractérisé par** un capteur (14) sous la forme d'un codeur angulaire combiné et/ou un système de mesure optique (5).

9. Système de mesure selon la revendication 7 ou 8, **caractérisé en ce que** les dispositifs de balayage à laser (4, 4a, 4b) sont des dispositifs de mesure à laser avec un système miroir/laser rotatif.

10. Système de mesure selon l'une des revendications 7 à 9, **caractérisé en ce que** le moniteur (9) est un appareil de vision.

11. Système de mesure selon l'une des revendications 7 à 10, **caractérisé en ce que** le véhicule est un lanceur de pont blindé.

12. Système de mesure selon l'une des revendications 7 à 11, **caractérisé en ce qu'**en cas d'utilisation de deux dispositifs de balayage (4, 4a, 4b), ceux-ci sont montés sur le véhicule avec un espacement d'environ 3 m l'un de l'autre.

13. Système de mesure selon l'une des revendications 7 à 12, **caractérisé en ce que** le système de mesure (100) est disposé dans la zone de la pointe du becquet du véhicule.
